(19) Europäisches Patentamt / European Patent Office / Office européen des brevets

(11) **EP 4 571 391 A1**

(12) **EUROPEAN PATENT APPLICATION**
published in accordance with Art. 153(4) EPC

(43) Date of publication:
**18.06.2025 Bulletin 2025/25**

(21) Application number: **23853025.7**

(22) Date of filing: **10.08.2023**

(51) International Patent Classification (IPC):
**G02B 27/01** (2006.01)    **G01B 7/14** (2006.01)
**H04N 13/271** (2018.01)    **H04N 13/254** (2018.01)
**H04N 13/239** (2018.01)

(52) Cooperative Patent Classification (CPC):
**G01B 7/14; G02B 27/01; H04N 13/239;
H04N 13/254; H04N 13/271**

(86) International application number:
**PCT/KR2023/011834**

(87) International publication number:
**WO 2024/035157 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022 KR 20220100642
25.08.2022 KR 20220107185**

(71) Applicant: **LG INNOTEK CO. LTD
Gangseo-gu
Seoul 07796 (KR)**

(72) Inventors:
• **CHO, Si Hyung
Seoul 07796 (KR)**
• **LEE, Gi Seok
Seoul 07796 (KR)**

(74) Representative: **M. Zardi & Co S.A.
Via G. B. Pioda, 6
6900 Lugano (CH)**

(54) **CAMERA DEVICE**

(57)    A camera device according to one embodiment of the present invention comprises: a first transmission/reception device including a first light-emitting unit for outputting a first output light signal, and a first light-receiving unit for receiving a first input light signal obtained through the reflection of the first output light signal from an object; a second transmission/reception unit including a second light-emitting unit for outputting a second output light signal, and a second light-receiving unit for receiving a second input light signal obtained through the reflection of the second output light signal from the object; a depth information generation unit for generating depth information about the object by using the first input light signal received in the first light-receiving unit and the second input light signal received in the second light-receiving unit; and a control unit for controlling the first transmission/reception device, the second transmission/reception device and the depth information generation unit, wherein: the first input light signal is an input light signal for a first area of the object, and the second input light signal is an input light signal for a second area of the object; the depth information includes first depth information about an overlapping area of the object in which the first area and the second area overlap, and second depth information about a non-overlapping area of the object in which the first area and the second area do not overlap; and the resolution of the first depth information is higher than the resolution of the second depth information.

[FIG. 4]

**Description**

**[Technical Field]**

The present invention relates to a camera device, and more specifically, to a camera device that generates a depth map.

**[Background Art]**

3-dimensional contents are applied in many fields such as games, culture, education, manufacturing, and autonomous driving, and a depth map is required to acquire the three-dimensional contents. The depth map is information representing a distance in space and represents perspective information of another point with respect to one point of a two-dimensional image. As a method of acquiring the depth map, a method of projecting infrared (IR) structured light onto an object, a method using a stereo camera, a time of flight (TOF) method, or the like is used.

According to the TOF method, a distance to an object is calculated by measuring TOF, that is, the time of reflection by shooting light. The biggest advantage of the TOF method is that it quickly provides distance information on a three-dimensional space in real time. In addition, users can obtain accurate distance information without adapting a separate algorithm or performing hardware calibration. In addition, accurate depth map can be acquired by measuring a very close subject or a moving subject.

Recently, gesture recognition, three-dimensional space mapping, or the like using a camera device that generates a depth map in augmented reality (AR) and virtual reality (VR) fields such as a head mounted display (HMD) are being attempted. In addition, the demand for a camera device that generates a depth map for object, space, and device interaction in various fields such as a mobile, a vehicle, and a robot is increasing.

In general, a camera device according to the TOF method outputs IR light toward an object. Since the IR light is invisible to the human eye, it may be difficult for a user to recognize that the amount of IR light that is higher than a safe level for the human body is output for a long time due to an error in the camera device, damage to a lens, or the like. Accordingly, the camera device according to the TOF method needs to limit an intensity or output time of the IR light. When the intensity or output time of the IR light is limited, the safety for the human body can be increased, but the resolution of the depth map can be reduced.

**[Disclosure]**

**[Technical Problem]**

The present invention is directed to providing a camera device which secure safety for the human body and has a high resolution of a depth map.

**[Technical Solution]**

A camera device according to one embodiment of the present invention includes a first transmission/reception device including a first light-emitting unit configured to output a first output light signal, and a first light-receiving unit configured to receive a first input light signal which is a signal in which the first output light signal is reflected from an object, a second transmission/reception device including a second light-emitting unit configured to output a second output light signal, and a second light-receiving unit configured to receive a second input light signal which is a signal in which the second output light signal is reflected from an object, a depth map generation unit configured to generate a depth map for the object using the first input light signal received by the first light-receiving unit and the second input light signal received by the second light-receiving unit, and a control unit configured to control the first transmission/reception device, the second transmission/reception device, and the depth map generation unit, wherein the first input light signal is an input light signal for a first area of the object, and the second input light signal is an input light signal for a second area of the object, the depth map includes a first depth map for an overlapping area of the object, in which the first area overlaps the second area, and a second depth map for a non-overlapping area of the object, in which the first area does not overlap the second area, and a resolution of the first depth map is higher than a resolution of the second depth map.

The overlapping area may be disposed between the non-overlapping areas.

The first depth map may be generated by synthesizing the first input light signal and the second input light signal for the overlapping area.

A light distribution of the first output light signal may be asymmetrical with respect to a center of the first area, and a light distribution of the second output light signal may be asymmetrical with respect to a center of the second area.

The first light-emitting unit and the second light-emitting unit may each include a light source and a diffusion member disposed on the light source.

The control unit may control the first light-emitting unit and the second light-emitting unit to be turned on/off alternately.

An optical axis of the first light-receiving unit may be parallel to an optical axis of the second light-receiving unit, an optical axis of the first light-emitting unit may not be parallel to the optical axis of the second light-receiving unit, and an optical axis of the second light-emitting unit may not be parallel to the optical axis of the second light-receiving unit.

The camera device may further include an angle control member disposed between the first light-receiving unit and the second light-receiving unit to control an angle formed by an optical axis of the first light-receiving unit and an optical axis of the second light-receiving unit, wherein a range of the overlapping area may vary according to an angle formed by the optical axis of the first light-receiving unit and the optical axis of the second light-receiving unit.

The control unit may control the angle control member.

An optical axis of the first light-emitting unit may be parallel to the optical axis of the first light-receiving unit, and an optical axis of the second light-emitting unit may be parallel to the optical axis of the second light-receiving unit.

A separation detection device according to an embodiment of the present invention includes a first body, a second body bonded to the first body, a detection pattern patterned across the first body and the second body on a bonded portion between the first body and the second body, and a detection unit electrically connected to the detection pattern, wherein the detection unit detects separation of the detection pattern.

The detection pattern may include a first pattern patterned on the first body, and a second pattern patterned on the second body, wherein the first pattern and the second pattern may be connected through one or more contact points, and the one or more contact points may be disposed on the bonded portion between the first body and the second body.

The detection pattern may be patterned by a laser direct structuring (LDS) method.

The detection pattern may include one or more cross patterns connected across the first body and the second body.

The detection pattern may be patterned in a meander shape or a zigzag shape formed across the first body and the second body.

The first body and the second body may each include one of surfaces that face and in contact with each other, and the detection pattern may include at least one first contact point disposed on a surface of the first body, which faces and is in contact with the surface of the second body, and at least one second contact point disposed on a surface of the second body, which faces and is in contact with the surface of the first body, and corresponding to the first contact point, and when the first contact point or the second contact point may be bonded and then separated, the pattern may be damaged.

The detection pattern may include a plurality of detection patterns that are connected to the detection unit to form a loop, and the plurality of detection patterns may each be patterned at different positions of the first body and the second body.

The detection unit may measure resistance of the detection pattern and detect separation of the first body and the second body according to a change in resistance.

An electronic device according to an embodiment of the present invention includes a first body, a second body bonded to the first body, an internal element disposed inside the first body or the second body, a control unit configured to control the internal element, and a detection pattern patterned across the first body and the second body on a bonded portion between the first body and the second body, wherein the control unit is electrically connected to the detection pattern to detect separation of the detection pattern.

The control unit may measure resistance of the detection pattern and detect separation of the first body and the second body according to the change in resistance.

The control unit may stop an operation of the internal element when detecting the separation of the detection pattern.

The control unit may block a re-operation of the internal element when detecting the separation of the detection pattern.

**[Advantageous Effects]**

According to the embodiments of the present invention, it is possible to obtain the camera device which can secure the safety for the human body and acquire the high resolution of the depth map.

According to the embodiments of the present invention, it is possible to acquire a more precise depth map within the primary field of view of the human eyes, thereby minimizing unnecessary amount of data and calculation and obtaining quality similar to what the human see with his or her eyes.

**[Description of Drawings]**

FIG. 1 is a block diagram of a camera device according to one embodiment of the present invention.
FIG. 2 is a flowchart illustrating a method of generating a depth map of the camera device according to one embodiment of the present invention.
FIG. 3 is a view for describing a depth map generation area using the camera device according to one embodiment of the present invention.
FIG. 4 is a conceptual diagram illustrating the camera device and a depth map generated using the same according to one embodiment of the present invention.
FIG. 5 is a block diagram of a camera device according to another embodiment of the present invention.
FIG. 6 is a conceptual diagram illustrating the camera device and a depth map generated using the same according to another embodiment of the present invention.
FIG. 7 is a block diagram of a separation detection device according to an embodiment of the present invention.
FIGS. 8 to 11 are views for describing separation detection of the separation detection device according to the embodiment of the present invention.
FIG. 12 is a block diagram illustrating an electronic device according to an embodiment of the present invention.

**[Mode for Invention]**

Hereinafter, exemplary embodiments of the present invention will be described in detail with reference to the accompanying drawings.

However, the technical spirit of the present invention is not limited to some of the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be construed as meaning that may be generally understood by those skilled in the art to which the present invention pertains unless explicitly specifically defined and described, and the meanings of the commonly used terms, such as terms defined in a dictionary, may be construed in consideration of contextual meanings of related technologies.

In addition, the terms used in the embodiments of the present invention are for describing the embodiments and are not intended to limit the present invention.

In the specification, a singular form may include a plural form unless otherwise specified in the phrase, and when described as "at least one (or one or more) of A, B, and C," one or more among all possible combinations of A, B, and C may be included.

In addition, terms such as first, second, A, B, (a), and (b) may be used to describe components of the embodiments of the present invention.

These terms are only for the purpose of distinguishing one component from another component, and the nature, sequence, order, or the like of the corresponding components is not limited by these terms.

In addition, when a first component is described as being "connected," "coupled," or "joined" to a second component, it may include a case in which the first component is directly connected, coupled, or joined to the second component, but also a case in which the first component is "connected," "coupled," or "joined" to the second component by other components present between the first component and the second component.

In addition, when a certain component is described as being formed or disposed on "on (above)" or "below (under)" another component, the terms "on (above)" or "below (under)" may include not only a case in which two components are in direct contact with each other, but also a case in which one or more other components are formed or disposed between the two components. In addition, when described as "on (above) or below (under)," it may include the meaning of not only an upward direction but also a downward direction based on one component.

A camera device according to an embodiment of the present invention may be a camera for extracting a depth map using a time of flight (TOF) function. Accordingly, the camera device may be used interchangeably with a TOF camera device, a TOF camera module, a TOF camera, etc.

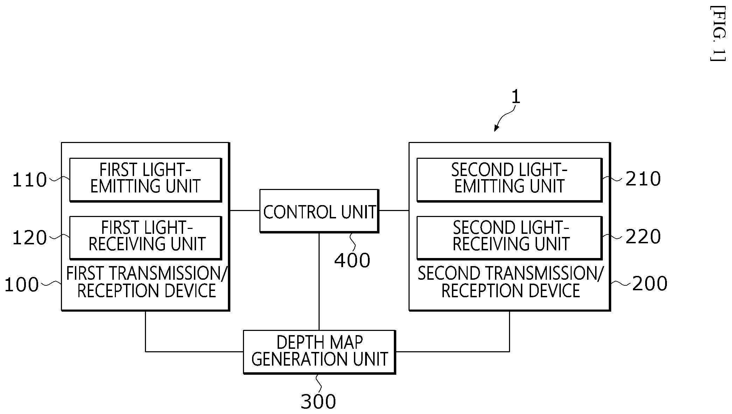

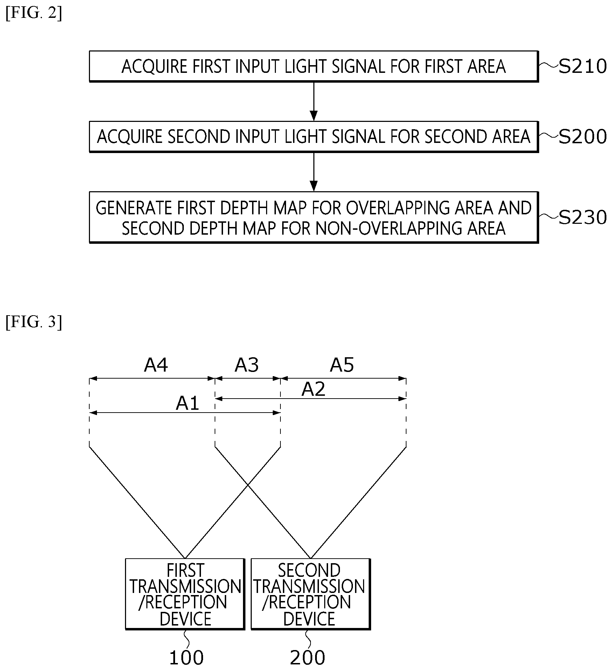

FIG. 1 is a block diagram of a camera device according to one embodiment of the present invention, FIG. 2 is a flowchart illustrating a method of generating a depth map of the camera device according to one embodiment of the present invention, and FIG. 3 is a view for describing a depth map generation area using the camera device according to one embodiment of the present invention.

Referring to FIG. 1, a camera device 1 according to the embodiment of the present invention includes a first transmission/reception device 100, a second transmission/reception device 200, a depth map generation unit 300, and a control unit 400. The first transmission/reception device 100 includes a first light-emitting unit 110 for outputting an output light signal and a light-receiving unit 120 for receiving an input light signal, and the second transmission/reception device 200 includes a second light-emitting unit 210 for outputting an output light signal and a light-receiving unit 220 for receiving an input light signal.

The first light-emitting unit 110 and the second light-emitting unit 210 generate and output the output light signal. In this case, the first light-emitting unit 110 and the second light-emitting unit 210 may generate and output the output light signal in the form of a pulse wave or a continuous wave. The continuous wave may be in the form of a sinusoid wave or squared wave. By generating the output light signal in the form of a pulse wave or a continuous wave, the camera device 1 may detect a time difference or phase difference between the output light signals output from the first light-emitting unit 110 and the second light-emitting unit 210 and the input light signals input to the first light-receiving unit 120 and the second light-receiving unit 220 after reflected from an object. In the present specification, output light may be light output from the first light-emitting unit 110 and the second light-emitting unit 210 and incident on an object, and input light may be light output from the first light-emitting unit 110 and the second light-emitting unit 210, reaching the object, then reflected from the object, and input to the first light-receiving unit 120 and the second light-receiving unit 220. Based on the object, the output light may be incident light, and the input light may be reflected light.

The first light-emitting unit 110 and the second light-emitting unit 210 may each include a light source, a lens assembly, and a diffusion member.

First, the light source generates light. The light generated by the light source may be infrared rays having a wavelength of 770 to 3000 nm. The light source may use a light emitting diode (LED) and have a form in which a plurality of light emitting diodes are arranged in a regular pattern. In addition, the light source may include an organic light emitting diode (OLED) or a laser diode (LD). Alternatively, the light source may be a vertical cavity surface emitting laser (VCSEL). The VCSEL is one of laser diodes for converting an electric signal into an optical signal and may output a wavelength of about 800 to 1000 nm, for example, a wavelength of about 850 nm or about 940 nm. The light source repeats blinking (on/off) at a predetermined time interval to generate an output light signal in the form of a pulse wave or a continuous wave. The regular time interval may be a frequency of the output light signal.

The lens assembly may collect light output from the light source and output the collected light to the outside. The lens assembly may be disposed to be spaced apart from the light source above the light source. Here, the "above the light source" may be a side at which light is output from the light source. The lens assembly may include at least one lens.

The lens assembly may be accommodated or supported in a housing. According to one embodiment, the housing may be coupled to a driving module, and the lens assembly may be moved in an optical axis direction or in a direction perpendicular to an optical axis by the driving module.

The diffusion member may receive the light output from the light source, then refract or diffract the received light, and output the refracted or diffracted light.

Meanwhile, the first light-receiving unit 120 and the second light-receiving unit 220 receive light reflected from an object. To this end, the first light-receiving unit 120 and the second light-receiving unit 220 may include a lens assembly for collecting input light reflected from the object, a filter, and an image sensor for converting input light passing through the lens assembly into an electric signal, and the lens assembly, the filter, and the image sensor may be accommodated or supported in a housing.

An optical axis of the lens assembly may be aligned with an optical axis of the image sensor. The filter may be disposed between the lens assembly and the image sensor and may filter light having a predetermined wavelength range. For example, the filter may allow light to pass therethrough in a wavelength band of output light output by the first light-emitting unit 110 and the second light-emitting unit 210.

The image sensor may be synchronized with a blinking cycle of the light source to receive an input light signal. Specifically, the image sensor may receive light in each of an in phase and out phase with the output light signal output from the light source. That is, the image sensor may repeatedly perform an operation of receiving an input light signal for a time for which the light source is turned on and an operation of receiving the input light signal for a time for which the light source is turned off. The image sensor may generate an electric signal corresponding to each reference signal using a plurality of reference signals having different phase differences. A frequency of the reference signal may be set to be equal to a frequency of the output light signal output from the light source. Accordingly, when the light source generates an output light signal with a plurality of frequencies, the image sensor generates an electric signal using the plurality of reference signals corresponding to each frequency. The electric signal may include information about the amount of charge or voltage corresponding to each reference signal.

The number of reference signals according to the embodiment of the present invention may be four ($C_1$ to $C_4$). Each of the reference signals ($C_1$ to $C_4$) may have the same frequency as the output light signal but have a 90 degree phase difference. One ($C_1$) of the four refer-ence signals may have the same phase as the output light signal. The input light signal is retarded in phase as much as a distance at which the output light signal is returned by being reflected after being incident on the object. The image sensor mixes the input light signal with each reference signal. Then, the image sensor may generate an electric signal for each reference signal.

The image sensor may be formed to have a structure in which a plurality of pixels are arranged in the form of a grid. The image sensor may be a complementary metal oxide semiconductor (CMOS) image sensor or a charge coupled device (CCD) image sensor. In addition, the image sensor may include a TOF sensor for receiving IR light reflected from an object and measuring a distance using a time or phase difference. For example, each pixel may include an in phase receiving unit for receiving an input light signal in the same phase as the waveform of the output light, and an out phase receiving unit for receiving an input light signal in a phase opposite to that of the waveform of the output light. When the in phase receiving unit and the out phase receiving unit are activated with a time difference, a difference occurs in the amount of light received by the in phase receiving unit and the out phase receiving unit depending on a distance to the object, and the distance to the object may be calculated using the above difference.

The first light-emitting unit 110 and the first light-receiving unit 120 of the first transmission/reception device 100 may be disposed side by side, and the second light-emitting unit 210 and the second light-receiving unit 220 of the second transmission/reception device 200 may be disposed side by side.

The depth map generation unit 300 may generate a depth map of an object using the input light signal input to the first light-receiving unit 120 and the second light-receiving unit 220. For example, the depth map generation unit 300 may generate a depth map of an object using a flight time taken for the output light signal output from the first light-emitting unit 110 to be reflected from the object and then input to the first light-receiving unit 120 and a flight time taken for the output light signal output from the second light-emitting unit 210 to be reflected from the object and then input to the second light-receiving unit 220. For example, the depth map generation unit 300 calculates a phase difference between the output light signal and the input light signal using the electric signal received from the image sensor and calculates a distance between the object and the camera device using the calculated phase difference.

Specifically, the depth map generation unit 300 may calculate the phase difference between the output light signal and the input light signal using charge amount information of the electric signal.

As described above, four electric signals may be generated for each frequency of the output light signal. Therefore, the depth map generation unit 300 may calculate a phase difference $t_d$ between the output light signal and the input light signal using Equation 1 below.

[Equation 1]

$$t_d = \arctan\left(\frac{Q_3 - Q_4}{Q_1 - Q_2}\right)$$

Here, $Q_1$ to $Q_4$ denote the charge amounts of four electric signals. $Q_1$ denotes the charge amount of the electric signal corresponding to the reference signal having the same phase as the output light signal. $Q_2$ denotes the charge amount of the electric signal corresponding to the reference signal having a phase 180 degrees slower than the output light signal. $Q_3$ denotes the charge amount of the electric signal corresponding to the reference signal having a phase 90 degrees slower than the output light signal. $Q_4$ denotes the charge amount of the electric signal corresponding to the reference signal having a phase 270 degrees slower than the output light signal.

Then, the depth map generation unit 300 may calculate the distance between the object and the camera device 1 using the phase difference between the output light signal and the input light signal. In this case, the depth map generation unit 300 may calculate a distance d between the object and the camera device 1 using Equation 2 below.

[Equation 2]

$$d = \frac{c}{2f}\frac{t_d}{2\pi}$$

Here, c denotes a speed of light, and f denotes a frequency of the output light.

The control unit 400 controls the driving of the first transmission/reception device 100, the second transmission/reception device 200, and the depth map generation unit 300.

Referring to FIGS. 1 to 3, the first light-receiving unit 120 of the first transmission/reception unit 100 acquires a first input light signal for a first area A1 (S210), the second light-receiving unit 220 of the second transmission/reception device 200 acquires a second input light signal for a second area A2 (S220), and the depth map generation unit 300 generates a first depth map for an overlapping area and a second depth map for a non-overlapping area using the first input light signal and the second input light signal (S230).

In this case, the first input light signal is a signal in which a first output light signal output by the first light-emitting unit 110 is reflected from the object and then input to the first light-receiving unit 120 and is the input light signal for the first area A1. The second input light signal is a signal in which a second output light signal output by the second light-emitting unit 210 is reflected from the object and then input to the second light-receiving unit 220 and is the input light signal for the second area A2.

According to an embodiment of the present invention, a part of the first area A1 may overlap a part of the second area A2, and the remainder of the first area A1 may not overlap the remainder of the second area A2. In the present specification, an area A3 in which the first area A1 overlaps the second area A2 is referred to as an "overlapping area," areas A4 and A5 in which the first area A1 does not overlap the second area A2 are referred to as "non-overlapping areas," and the overlapping area A3 may be disposed between the non-overlapping areas A4 and A5.

To this end, according to an embodiment of the present invention, the first light-emitting unit 110 and the second light-emitting unit 210 may be set to be turned on/off alternately, a first output light signal output cycle of the first light-emitting unit 110 and a first input light signal reception cycle of the first light-receiving unit 120 are synchronized, and a second output light signal output cycle of the second light-emitting unit 210 and a second input light signal reception cycle of the second light-receiving unit 220 may be synchronized. According to an embodiment of the present invention, the control unit 400 may control the operations of the first light-emitting unit 110, the first light-receiving unit 120, the second light-emitting unit 210, and the second light-receiving unit 220.

In this way, when the first light-emitting unit 110 and the second light-emitting unit 210 are set to be turned on/off alternately, an intensity of the output light signal output at a specific time may be reduced, thereby increasing the safety for the human body. In addition, the total field of view (FOV) of the camera device 1 may be expanded to the first area A1 and the second area A2.

Meanwhile, according to an embodiment of the present invention, in operation S230, the depth map generation unit 300 generates the first depth map for the overlapping area A3 in which the first area A1 overlaps the second area A2, and the second depth map for the non-overlapping areas A4 and A5 in which the first area A1 does not overlap the second area A2. To this end, the depth map generation unit 300 may generate the depth map for the first area A1 using the time difference or phase difference between the first input light signal and the first output light signal for the first area A1, generate the depth map for the second area A2 using the time difference or phase difference between the second input light signal and the second output light signal for the second area A2, and then synthesize the depth map for the first area A1 with the depth map for the second area A2. The synthesis of the depth map for the first area A1 and the depth map for the second area A2 may be performed using at least one of a depth image convolution algorithm and a reconstruction algorithm. For example, the depth map generation unit 300 may extract a plurality of first feature points from the depth map for the first area A1, extract a plurality of second feature points from the depth map for the second area A2, and extract pairs of feature points that correspond to the plurality of first feature points and the plurality of second feature points. The first depth map may be generated using the reconstruction algorithm for the extracted pairs of feature points. However, this is only an example in which the depth map for the first area A1 is synthesized with the depth map for the second area A2, and the depth map for the first area A1 and the depth map for the second area A2 may be synthesized using any technique of synthesizing images. Accordingly, the resolution of the first depth map for the overlapping are A3 in which the first area A1 overlaps the second area A2 is higher than the resolution of the second depth map for the non-overlapping areas A4 and A5 in which the first area A1 does not overlap the second area A2. When a range of the overlapping area A3 is set to be within $\pm 30°$, which is the primary field of view of the human eye, the resolution of the first depth map for the overlapping area A3 corresponding to the primary field of view of the human eyes is higher than the resolution of the second depth map for the non-overlapping areas A4 and A5 corresponding to the periphery of the primary field of view of the human eyes, and thus a depth map having quality similar to that recognized by the human eyes may be generated.

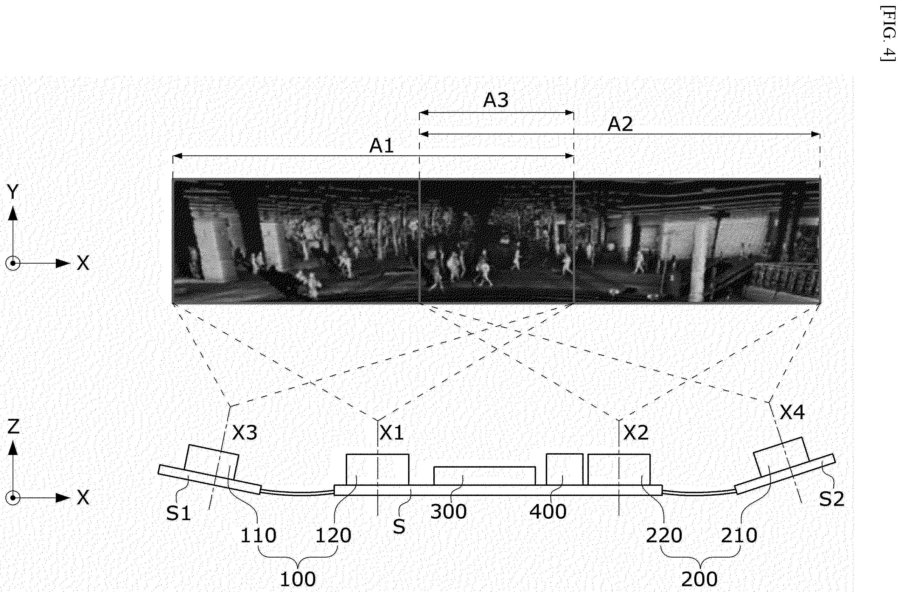

FIG. 4 is a conceptual diagram illustrating the camera device and a depth map generated using the same according to one embodiment of the present invention. For convenience of description, overlapping description for the same contents as those described with reference to FIGS. 1 to 3 will be omitted.

Referring to FIG. 4, the camera device 1 includes the first transmission/reception device 100, the second transmission/reception device 200, the depth map generation unit 300, and the control unit 400. The first transmission/reception device 100 includes the first light-emitting unit 110 for outputting the first output light signal and the light-receiving unit 120 for receiving the first input light signal, and the second transmission/reception device 200 includes the second light-emitting unit 210 for outputting the second output light signal and the light-receiving unit 220 for receiving the second input light signal. The depth map generation unit 300 generates the depth map using the first output light signal, the first input light signal, the second output light signal, and the second input light signal, and the control unit 400 generally controls the first transmission/reception device 100, the second transmission/reception device 200, and the depth map generation unit 300.

According to one embodiment of the present invention, the first transmission/reception device 100 and the second transmission/reception device 200 may be disposed adjacent to each other, and the first light-receiving unit 120 of the first transmission/reception device 100 and the second light-receiving unit 220 of the second transmission/reception device 200 may be disposed between the first light-emitting unit 110 of the first transmission/reception device 100 and the second light-emitting unit 210 of the second transmission/reception device 200. That is, the first light-emitting unit 110, the first light-receiving unit 120, the second light-receiving unit 220, and the second light-emitting unit 210 may be disposed sequentially in an X-axis direction. In this way, when the first light-receiving unit 120 and the second light-receiving unit 220 are disposed between the first light-emitting unit 110 and the second light-emitting unit 210, a distance between the first light-receiving unit 120 and the second light-receiving unit 220 can be minimized, thereby increasing the range of the overlapping area, which is the area A3 in which the first area A1 overlaps the second area A2. According to an embodiment of the present invention, the range of the overlapping area may vary depending on the distance between the first light-receiving unit 120 and the second light-receiving unit 220. Here, the range of the overlapping area may refer to a width in the X-axis direction.

In this case, the first light-receiving unit 120 and the second light-receiving unit 220 may be disposed side by side, and an optical axis X1 of the first light-receiving unit 120 may be parallel to an optical axis X2 of the second light-receiving unit 220. Accordingly, the first light-receiving unit 120 and the second light-receiving unit 220 may acquire input light signals for the entire area extending from one end of the first area A1 to the other end of the second area A2 in the X-axis direction.

To this end, the first light-receiving unit 120 and the second light-receiving unit 220 may be disposed on one substrate S. Although FIG. 4 illustrates the depth map generation unit 300 and the control unit 400 that are disposed between the first light-receiving unit 120 and the second light-receiving unit 220, the present invention is not limited thereto. The depth map generation unit 300 and the control unit 400 may be disposed in any area on the substrate S on which the first light-receiving unit 120 and the second light-receiving unit 220 are disposed and may be implemented by a circuit pattern or IC chip formed on the substrate S. Alternatively, the depth map generation unit 300 and the control unit 400 may be included in an electronic device in which the camera device 1 according to the embodiment of the present invention is disposed. For example, the depth map generation unit 300 and the control unit 400 may be implemented in the form of an application processor (AP) of the electronic device in which the camera device 1 according to the embodiment of the present invention is mounted.

According to an embodiment of the present invention, the first light-emitting unit 110 radiates the first output light signal, and the second light-emitting unit 210 radiates the second output light signal. According to an embodiment of the present invention, the first light-emitting unit 110 and the second light-emitting unit 210 may be turned on/off alternately. Accordingly, since the first output light signal and the second output light signal are not output at the same time, the safety of the human body can be increased.

According to an embodiment of the present invention, the first light-emitting unit 110 radiates the first output light signal to the area including the first area A1, and the second light-emitting unit 210 radiates the second output light signal to the area including the second area A2. That is, the area in which the first output light signal is radiated may be greater than the first area A1 for the first input light signal received by the first light-receiving unit 120, and the area in which the second output light signal is radiated may be greater than the second area A2 for the second input light signal received by the second light-receiving unit 220. In particular, each of the first output light signal and the second output light signal needs to be radiated to the area including the overlapping area A3 of the first area A1 and the second area A2. Accordingly, a synthesized depth map may be obtained for the entire overlapping area A3, which is the area A3 in which the first area A1 overlaps the second area A2.

Meanwhile, as described above, the first light-emitting unit 110 and the second light-emitting unit 210 are disposed at both sides of the first light-receiving unit 210 and the second light-receiving unit 220. Nevertheless, in order for the first output light signal to be radiated to the area including the first area A1 and the second output light signal to be radiated to the area including the second area A2, an optical axis X3 of the first light-emitting unit 110 may not be parallel to the optical axis X1 of the first light-receiving unit 120, and an optical axis X4 of the second light-emitting unit 210 may not be parallel to the optical axis X2 of the second light-receiving unit 220. For example, the optical axis X3 of the first light-emitting unit 110 may be tilted at a predetermined angle toward the optical axis X1 of the first light-receiving unit 120, and the optical axis X4 of the second light-emitting unit 210 may be tilted at a predetermined angle toward the optical axis X2 of the second light-receiving unit 220. To this end, the first light-emitting unit 110 may be disposed on a separate substrate S1 other than the substrate S on which the first light-receiving unit 120 is disposed, the second light-emitting unit 210 may be disposed on a separate substrate S2 other than the substrate S on which the second light-receiving unit 220 is disposed, the substrate S1 may be disposed to be tilted at a predetermined angle with respect to the substrate S, and the substrate S2 may be tilted at a predetermined angle with respect to the substrate S. Alternatively, the lens assemblies included in the first light-emitting unit 110 and the second light-emitting unit 210 may include an off-axis lens. Accordingly, a light distribution of the first output light signal may be asymmetrical with respect to the center of the first area A1, and a light distribution of the second output light signal may be asymmetrical with respect to the center of the second area A2.

Alternatively, the first light-emitting unit 110 and the second light-emitting unit 210 each include a diffusion member, and the diffusion member may be disposed on the light source to diffuse the output light signal. A size of the area in which the output light signal is radiated may be expanded depending on a shape, type, and size of the diffusion member.

Accordingly, the depth map generation device 300 generates the first depth map for the overlapping area A3 in which the first area A1 overlaps the second area A2 and the second depth map for the non-overlapping areas A4 and A5 in which the first area A1 does not overlap the second area A2. Since the first depth map for the overlapping area A3 in which the first area A1 overlaps the second area A2 is obtained by synthesizing the depth map for the first area A1 and the depth map for the second area A2, the resolution of the overlapping area A3 is higher than the resolution of the second depth map for the non-overlapping areas A4 and A5 in which the first area A1 does not overlap the second area A2. When the range of the overlapping area A3 is set to be within ±30°, which is the primary field of view of the human eye, the resolution of the first depth map for the overlapping area A3 corresponding to the primary field of view of the human eyes is higher than the resolution of the second depth map for the non-overlapping areas A4 and A5 corresponding to the periphery of the primary field of view of the human eyes, and thus a depth map having quality similar to that recognized by the human eyes may be generated.

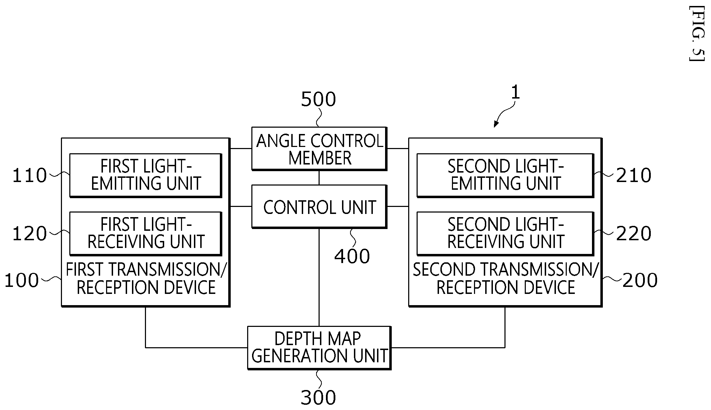

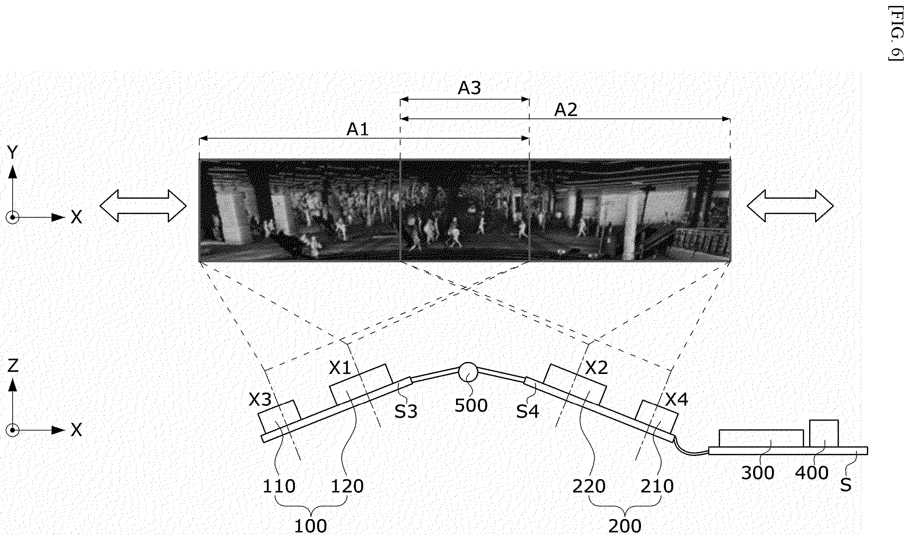

FIG. 5 is a block diagram of a camera device according to another embodiment of the present invention, and FIG. 6 is a conceptual diagram illustrating the camera device and a depth map generated using the same according to another embodiment of the present invention. For convenience of description, overlapping description for the same contents as those described with reference to FIGS. 1 to 4 will be omitted.

Referring to FIGS. 5 and 6, the camera device 1 includes the first transmission/reception device 100, the second transmission/reception device 200, the depth map generation unit 300, and the control unit 400. The first transmission/reception device 100 includes the first light-emitting unit 110 for outputting the first output light signal and the light-receiving unit 120 for receiving the first input light signal, and the second transmission/reception device 200 includes the second light-emitting unit 210 for outputting the second output light signal and the light-receiving unit 220 for receiving the second input light signal. The depth map generation unit 300 generates the depth map using the first output light signal, the first input light signal, the second output light signal, and the second input light signal, and the control unit 400 generally controls the first transmission/reception device 100, the second transmission/reception device 200, and the depth map generation unit 300.

Here, the first transmission/reception device 100 and the second transmission/reception device 200 may be disposed adjacent to each other, and the first light-receiving unit 120 of the first transmission/reception device 100 and the second light-receiving unit 220 of the second transmission/reception device 200 may be disposed between the first light-emitting unit 110 of the first transmission/reception device 100 and the second light-emitting unit 210 of the second transmission/reception device 200. That is, the first light-emitting unit 110, the first light-receiving unit 120, the second light-receiving unit 220, and the second light-emitting unit 210 may be disposed sequentially. In this way, when the first light-receiving unit 120 and the second light-receiving unit 220 are disposed between the first light-emitting unit 110 and the second light-emitting unit 210, a distance between the first light-receiving unit 120 and the second light-receiving unit 220 can be minimized, thereby increasing the range of the overlapping area, which is the area A3 in which the first area A1 overlaps the second area A2.

Meanwhile, according to an embodiment of the present invention, the camera device 1 may further include an angle control member 500. The angle control member 500 is disposed between the first transmission/reception device 100 and the second transmission/reception device 200, particularly, between the first light-receiving unit 120 of the first transmission/reception device 100 and the second light-receiving unit 220 of the second transmission/reception device 200 and controls an angle formed by the optical axis of the first light-receiving unit 120 and the optical axis of the second light-receiving unit 220. When the angle formed by the optical axis of the first light-receiving unit 120 and the optical axis of the second light-receiving unit 220 changes, the range of the first area A1 and the range of the second area A2 changes, and thus the range of the overlapping area in which the first area A1 overlaps the second area A2 also changes. For example, the first light-receiving unit 120 and the second light-receiving unit 220 have a preset range of FOV. That is, the range of the first area A1 of the first light-receiving unit 120 and the range of the second area A2 of the second light-receiving unit 220 are set in advance. Here, for convenience of description, the range of the first area A1 and the range of the second area A2 may refer the widths in the X-axis direction. According to an embodiment of the present invention, when the optical axis of the first light-receiving unit 120 and the optical axis of the second light-receiving unit 220 are tilted to be closer to each other, the range of the overlapping area A3 in which the first area A1 overlaps the second area A2 may increase, and the entire range in which the camera device 1 may recognize, that is, the range from the left side of the first area A1 to the right side of the second area A2, may decrease in comparison to a case in which the optical axis of the first light-receiving unit 120 is parallel to the optical axis of the second light-receiving unit 220. In contrast, when the optical axis of the first light-receiving unit 120 and the optical axis of the second light-receiving unit 220 are tilted to be away from each other, the range of the overlapping area A3 in which the first area A1 overlaps the second area A2 may decrease, and the entire range in which the camera device 1 may recognize, that is, the range from the left side of the first area A1 to the right side of the second area A2, may increase in comparison to a case in which the optical axis of the first light-receiving unit 120 is parallel to the optical axis of the second light-receiving unit 220.

In this way, according to an embodiment of the present invention, by controlling the angle formed by the optical axis of the first light-receiving unit 120 and the optical axis of the second light-receiving unit 220, the entire range in which the camera device 1 may recognize may be controlled, and the range of the overlapping area which may be recognized by the two light-receiving units in the camera device 1 to obtain a high-resolution depth map may be controlled. According to an embodiment of the present invention, when the entire range in which the camera device 1 may recognize needs to be expanded, the optical axis of the first light-receiving unit 120 and the optical axis of the second light-receiving unit 220 may be set to be away from each other using the angle control member 500, and when the range of the overlapping area requiring a precise depth map needs to be expanded, the optical axis of the first light-receiving unit 120 and the optical axis of the second light-receiving unit 220 may be set to be closer to each other using the angle control member 500.

According to an embodiment of the present invention, the angle control member 500 may be controlled by the control unit 400. The angle control member 500 may include, for example, at least one of a hinge, a stepping motor, a microelectromechanical systems (MEMS), and a piezo element which are disposed between the first light-receiving unit 120 and the second light-receiving unit 220. According to an embodiment of the present invention, the control unit 400 may control the angle control member 500 in real time, and thus, a recognition range of the camera device 1 may be controlled in real time according to various applications and a user's needs.

According to an embodiment of the present invention, when the angle control member 500 is disposed between the first transmission/reception device 100 and the second transmission/reception device 200 to adjust the angle between the optical axis of the first light-receiving unit 120 of the first transmission/reception device 100 and the optical axis of the second light-receiving unit 220 of the second transmission/reception device 200, the first light-emitting unit 110 and the first light-receiving unit 120 of the first transmission/reception device 100 may be disposed on one substrate S3, and the second light-emitting unit 210 and the second light-receiving unit 220 of the second transmission/reception device 200 may also be disposed on one substrate S4.

In this case, the optical axis X3 of the first light-emitting unit 110 may be parallel to the optical axis X1 of the first light-receiving unit 120, and the optical axis X4 of the second light-emitting unit 210 may be parallel to the optical axis X2 of the second light-receiving unit 220. However, in order for the first output light signal output by the first light-emitting unit 110 to be radiated to the area including the first area A1 and the second output light signal output by the second light-emitting unit 210 to be radiated to the area including the second area A2, the first light-emitting unit 110 and the second light-emitting unit 210 may each include the diffusion member disposed on the light source.

Alternatively, the optical axis X3 of the first light-emitting unit 110 may not be parallel to the optical axis X1 of the first light-receiving unit 120, and the optical axis X4 of the second light-emitting unit 210 may not be parallel to the optical axis X2 of the second light-receiving unit 220. To this end, the first light-emitting unit 110 and the first light-receiving unit 120 may be disposed on the same substrate S3, and the area in which the first light-emitting unit 110 is disposed may be tilted with respect to the area in which the first light-receiving unit 120 is disposed. Likewise, the second light-emitting unit 210 and the second light-receiving unit 220 may be disposed on the same substrate S4, and the area in which the second light-emitting unit 210 is disposed may be tilted with respect to the area in which the second light-receiving unit 220 is disposed. Alternatively, the lens assembly included in the first light-emitting unit 110 and the lens assembly included in the second light-emitting unit 210 may each include an off-axis lens.

Accordingly, the light distribution of the first output light signal may be asymmetrical with respect to the center of the first area A1, and the light distribution of the second output light signal may be asymmetrical with respect to the center of the second area A2, but since the first output light signal is radiated to include the first area A1, and the second output light signal is radiated to include the second area A2, a depth map may be generated for the entire area including the first area A1 and the second area A2.

Meanwhile, the camera device according to the embodiment of the present invention may be applied to AR glasses.

Depending on the user's eyesight, a separate lens or glasses needs to be worn when using the AR glasses, and real images may be used according to the user's eyesight through a projector mounted on the AR glasses. In addition, a focus may be reconfigured at any time according to a change in user's eyesight, and the device may be customized without settings every time by saving a measured eyesight value.

In the case of AR glasses, when a small gap occurs in the device, light emitted from the projector can affect the user's eyesight, and thus there is a need for a technology that can prevent a malfunction of the device for eye safety.

According to an embodiment of the present invention, a separation detection device for detecting whether a bonded portion of the first transmission/reception device 100 included in the camera device 1 or the second transmission/reception device 200 included in the camera device 1 is separated is provided.

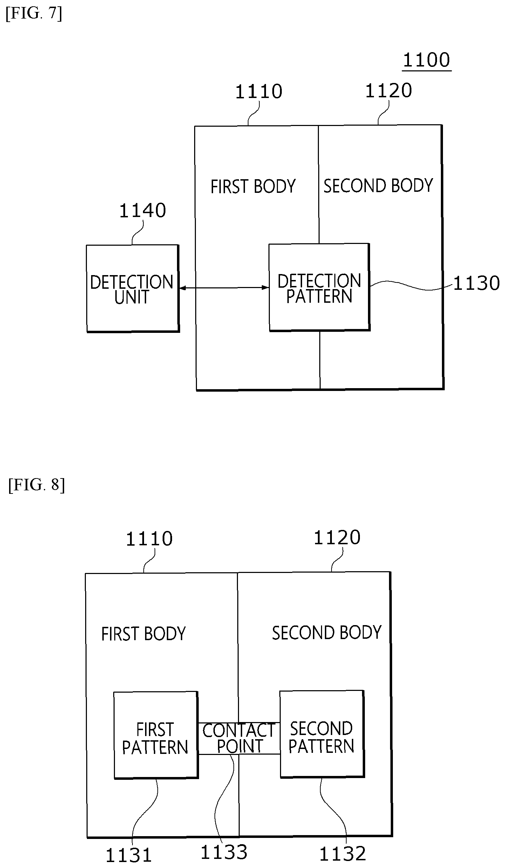

FIG. 7 is a block diagram of a separation detection device according to an embodiment of the present invention, and FIGS. 8 to 11 are views for describing separation detection of the separation detection device according to the embodiment of the present invention.

A separation detection device 1100 according to the embodiment of the present invention includes a detection pattern 1130 and a detection unit 1140, and the detection pattern 1130 may be patterned on a first body 1110 and a second body 1120.

The first body 1110 and the second body 1120 are bonded. The first body 1110 and the second body 1120 may be a housing bonded to each other. The first body 1110 and the second body 1120 may be an internal housing for protecting major core components or an external housing forming an exterior of a product in an engaged form or assembled form. One of the first body 1110 and the second body 1120 may be a case which accommodates the product, the other may be a cover which covers the case, and the case and the cover may form a housing.

The first body 1110 and the second body 1120 may be bonded and coupled. The first body 1110 and the second body 1120 may be bonded and coupled by welding, soldering, or laser coupling. The first body 1110 and the second body 1120 may be mechanisms which need to be bonded without being separated when bonded to each other. For example, the first body 1110 and the second body 1120 may form at least a part of a housing of the first transmission/reception device 100 included in the camera device 1 or form at least a part of the housing of the second transmission/reception device 200 included in the camera device 1. Alternatively, the first body 1110 and the second body 1120 may form at least a part of the housing of the first light-emitting unit 110 of the first transmission/reception device 100 included in the camera device 1 or form at least a part of the housing of the second light-emitting unit 210 of the second transmission/reception device 200 included in the camera device 1. Alternatively, the first body 1110 and the second body 1120 may form at least a part of the housing of the lens assembly of the first light-emitting unit 110 of the first transmission/reception device 100 included in the camera device 1 or form at least a part of the housing of the lens assembly of the second light-emitting unit 210 of the second transmission/reception device 200 included in the camera device 1.

When the camera device according to the embodiment of the present invention is applied to the AR glasses, the first body 1110 and the second body 1120 according to the embodiment of the present invention may be a housing of the projector mounted on the AR glasses. For example, the first body 1110 may be a case of the projector of the AR glasses, and the second body 1120 may be a cover of the projector of the AR glasses. The case and the cover may be coupled to form the housing. The light emitted from the projector needs to be controlled, but when a gap occurs in the housing due to an external impact or the like, the AR glasses can affect the user's eyesight due to the emission of strong light, and thus it is important to maintain the bonding of the housing. Alternatively, in the case of a device in which waterproofing and moisture resistance are important, sealing is essential, and thus the housing may be a housing of a device that needs to maintain bonding without being separated. Alternatively, the housing may be a housing in which a component requiring security maintenance is built in and may be a housing of a device that needs to prevent intentional disassembly attempts.

The detection pattern 1130 is patterned across the first body 1110 and the second body 1120 on the bonded portion of the first body 1110 and the second body 1120. To detect whether the bonding of the first body 1110 and the second body 1120 is maintained or separated, the detection pattern 1130 is formed on the bonded portion of the first body 1110 and the second body 1120. In this case, the detection pattern 1130 is patterned across the first body 1110 and the second body 1120.

The detection pattern 1130 may be patterned by a laser direct structuring (LDS) method. The LDS is formed by patterning a surface of a plastic injection-molded product using a laser and being plated with a metallic material. Fine patterning is possible through LDS patterning, and an electrical pattern may be formed on the first body 1110 and the second body 1120. The detection pattern 1130 may be formed by being patterned on the first body 1110 and the second body 1120 in any other method.

The detection pattern 1130 may include one or more cross patterns connected across the first body 1110 and the second body 1120. The first body 1110 and the second body 1120 may be bonded and may include the cross patterns connected across the first body 1110 and the second body 1120 in the bonded state. When the first body 1110 and the second body 1120 are bonded, the cross patterns may be maintained as one pattern in a form that crosses the first body 1110 and the second body 1120, and when the first body 1110 and the second body 1120 are separated, the cross patterns are also separated and cannot be maintained as one pattern.

The detection pattern 1130 may include a first pattern 1131 patterned on the first body 1110 and a second pattern 1132 patterned on the second body 1120, and the first pattern 1131 and the second pattern 1132 may be connected through one or more contact points 1133. The detection pattern 1130 may have the first pattern 1131 and the second pattern 1132 formed on the first body 1110 and the second body 1120, respectively, and when the first body 1110 and the second body 1120 are bonded, the first pattern 1131 and the second pattern 1132 may be connected through the contact point 1133. When the bonding of the first body 1110 and the second body 1120 is maintained, the first pattern 1131 and the second pattern 1132 are connected through the contact point 1133, and when the first body 1110 and the second body 1120 are separated, the first pattern 1131 and the second pattern 1132 connected through the contact point 1133 are separated. The contact point 1133 may include one or more contact points and include a plurality of contact points 1133. Through the plurality of contact points 1133, a range of an area in which the separation of the first body 1110 and the second body 1120 is detected may be expanded. When a gap occurs between the first body 1110 and the second body 1120 due to an external impact or the like, the first body 1110 and the second body 1120 may be completely separated, but the separation may occur only in some areas, and thus the separation of the separation detection device 1100 may be detected by arranging the plurality of contact points 1133 across the bonded portion of the first body 1110 and the second body 1120.

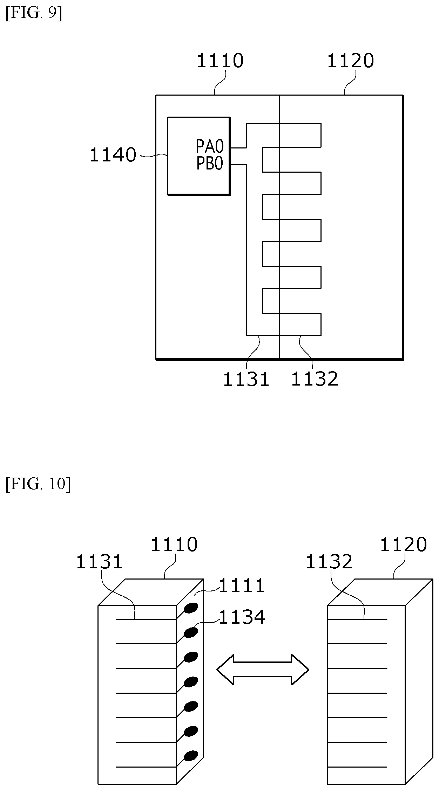

The detection pattern 1130 may be patterned in a meander shape or a zig-zag shape formed across the first body 1110 and the second body 1120. As illustrated in FIG. 9, the detection pattern 1130 may be patterned in a meander shape that repeatedly crosses the first body 1110 and the second body 1120. Accordingly, the detection pattern 1130 may form the plurality of contact points 1133. The meander-shaped patterning may be formed across the entirety of the bonded portion of the first body 1110 and the second body 1120. Accordingly, one loop may be formed, and the plurality of contact points may be formed.

The detection unit 1140 is electrically connected to the detection pattern 1130 to detect the separation of the detection pattern 1130. The detection pattern 1130 is an electrically connected pattern, and the detection unit 1140 may be electrically connected to the detection pattern 1130 so that a current flows through the detection pattern 1130 to detect the separation of the detection pattern 1130.

The detection unit 1140 may measure resistance of the detection pattern 1130 and detect the separation of the first body 1110 and the second body 1120 according to a change in resistance. The detection unit 1140 may apply a signal to the detection pattern 1130 and detect a signal that moves through the detection pattern 1130 and is output from the detection pattern 1130 to measure the resistance of the detection pattern 1130. To determine whether the detection pattern 1130 is electrically connected, the detection unit 1140 may be electrically connected to the detection pattern 1130 through at least two connection ports. One connection port may be an output port through which the signal is output to the detection pattern 1130, and the other connection port may be an input port through which the signal is received from the detection pattern 1130. The detection unit 1140 may be a micro controller unit (MCU), and the connection ports may use PA0 and PB0 as illustrated in FIG. 9. PA0 and PB0 may be ADC or DAC ports, may convert a digital signal into an analog signal to output the analog signal to the detection pattern 1130, and convert an analog signal received from the detection pattern 1130 into a digital signal to measure the resistance of the detection pattern 1130.

The detection pattern 1130 may have different resistance depending on the resistance characteristics of a material patterned as a conductive pattern and a length of the pattern. The detection unit 1140 may apply a signal to the detection pattern 1130 in a state in which the first body 1110 is bonded to the second body 1120, measure the resistance of the detection pattern 1130 using the signal output from the detection pattern 1130, and set the measured resistance to reference resistance. The detection unit 1140 may measure the resistance of the detection pattern 1130 in real time or periodically and compare the measured resistance with the reference resistance to detect a change in resistance. When the first body 1110 and the second body 1120 are separated, the resistance may increase, and when a difference in resistance exceeds a critical range, the detection unit 1140 may determine that the first body 1110 and the second body 1120 are separated. When the first body 1110 and the second body 1120 are completely separated, the loop of the detection pattern 1130 may be released and opened so that no current flows, and the detection unit 1140 may determine that the first body 1110 and the second body 1120 are separated.

When the contact point 1133 of the detection pattern 1130 is temporarily separated and an electrically-disconnected state is maintained for a predetermined time, the detection unit 1140 may determine that the first body 1110 and the second body 1120 are separated. For example, when the state in which the detection pattern 1130 is electrically disconnected is maintained for 1 ms or more, the detection unit 1140 may determine that the first body 1110 and the second body 1120 are separated.

The first body 1110 and the second body 1120 may each include one of surfaces that face and in contact with each other, and the detection pattern 130 may include at least one first contact point 1134 disposed on a surface 1111 of the first body, which faces and is in contact with a surface of the second body 1120, and at least one second contact point (not illustrated) disposed on a surface of the second body 1120, which faces and is in contact with the surface 1111, and corresponding to the first contact point 1134. The detection pattern 1130 can be damaged when the first contact point 1134 or the second contact point are bonded and then separated.

As illustrated in FIG. 10, the detection pattern 1130 may be formed on the surfaces in which the first body 1110 is in contact with the second body 1120. That is, a pattern may be formed on the surfaces that face each other and are directly bonded, and contact points may be formed on the corresponding surfaces. The circular first contact point 1134 may be formed on the bonded surface 1111 of the first body 1110, and the corresponding second contact point may also be formed on the second body 1120. The first contact point 1134 and the second contact point may be formed of materials that melt and are integrated when bonded and are easily separated. When the first body 1110 and the second body 1120 are separated, the integrated first contact point 1134 and second contact point may be separated, and at this time, the first contact point 1134 or the second contact point can be physically damaged, making it difficult to re-bond the first contact point 1134 and the second contact point. Accordingly, when the first body 1110 and the second body 1120 are intentionally disassembled, their operations may be made impossible permanently. A case in which the permanent operation is made impossible according to the separation determination of the detection unit 1140 is possible only when the detection unit 1140 operates, and thus during intentional disassembly, when the operation of the detection unit 1140 is stopped, hacking or the like may be possible. In this case, by physically damaging the first contact point 1134 or the second contact point during separation, permanent inoperability may be implemented without the separation detection of the detection unit 1140.

The detection pattern 1130 may include a plurality of detection patterns that are connected to the detection unit 1140 to form a loop, and the plurality of detection patterns may each be patterned at a different position. One detection pattern 1130 may form one loop, and even when the plurality of contact points are formed as illustrated in FIG. 9, when the first body 1110 and the second body 1120 are separated at each contact point, whether separation occurs is only determined, and it is difficult to detect at which contact point the separation occurs. To detect the position at which the separation occurs, as illustrated in FIG. 10, a plurality of detection patterns 1510 to 1540 each forming a loop may be formed, and a contact point of each detection pattern 1130 is formed at a different position, and thus a separation area detected by each detection pattern may be set differently. In this case, since each of the detection pattern 1510 to 1540 needs to form the loop, the detection unit 1140 may include two input/output ports for each detection pattern. Alternatively, the detection unit 1140 may include one output port which outputs a signal to each of the detection pattern 1510 to 1540 and a plurality of input ports which receive a signal from each of the detection patterns 1510 to 1540. In this way, resistance may be measured independently for each of the detection patterns 1510 to 1540, and it is possible to determine which of detection patterns is separated by comparing each resistance with the reference resistance. Although FIGS. 7 to 11 illustrate that the first body 1110 and the second body 1120 are bonded on one surface, the first body 1110 and the second body 1120 may be bonded on two or more surfaces, and a detection pattern may be formed on each surface in which the bonding is made to determine which of the bonding surfaces is separated.

As described above, by detecting separation using the detection pattern, when a structure attempts to be intentionally disassembled, the operation of the corresponding product may be permanently made impossible, and damage to the housing may be electrically monitored in the event of a physical impact such as a drop, and a malfunction of the device can be prevented in the event of a safety issue in addition to eye-safety. In the case of normal disassembly rather than intentional disassembly, the permanent operation stop may be released using a security code for disassembling a structure according to a pre-approved procedure. Since the electrical pattern cannot be detected when the MCU, which is the detection unit 1140, is not operated, a rounded circle portion of the contact point may be manufactured to be physically separated well without detection by the detection unit 1140 as illustrated in FIG. 10 so that the pattern may be physically damaged during the initial disassembly.

In an internal housing for protecting major core components in an engaged form or assembled form or an external housing forming an exterior of a product, these housings may be applied to a device forming electrical contact points using the LDS so as to be connected to the bonded portion of the mechanically disassembled housings, by testing the electrical connection state, when the contact points of two housings are electrically connected, a normal operation is performed, and when the contact points are temporarily separated and an electrically disconnected state is maintained for a predetermined time, for example, 1 msec or more, the contact points may serve as an e-fuse (hereinafter referred to as "electrical-fuse") so that permanent inoperability is made possible according to conditions. In this case, the detection unit 1140, which is an MCU, may set the electrical-fuse not to operate even when the housing is disassembled (even when the contact points are separated) by inputting a predetermined security code through an external communication interface. When disassembly is attempted for the purpose of performing intentional disassembly to monitor a mechanical movement or electrical movement, permanent inoperability is made possible, and many contact points may be used for important core components to detect even a small gap caused by an artificial force. According to an embodiment of the present invention, the detection unit 1140 may be an independent MCU for the separation detection device 1100 or may be the control unit 400 of the camera device 1.

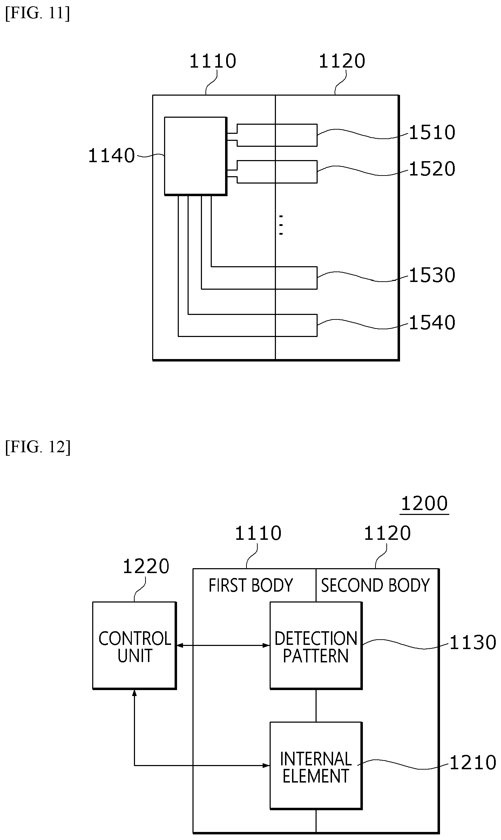

FIG. 12 is a block diagram illustrating an electronic device according to an embodiment of the present invention. An electronic device 1200 according to an embodiment of the present invention includes the first body 1110, the second body 1120 connected to the first body 1110, an internal element 1210 disposed inside the first body 1110 or the second body 1120, a control unit 1220 for controlling the internal element 1210, and the detection pattern 1130 patterned across the first body 1110 and the second body 1120 on the bonded portion between the first body 1110 and the second body 1120. The control unit 1220 is electrically connected to the detection pattern 1130 to detect the separation of the detection pattern 1130. Since detailed description of each component of the electronic device 1200 according to one embodiment of the present invention corresponds to the detailed description of the separation detection device of FIGS. 7 to 11, overlapping description thereof will be omitted below.

The internal element 1210 may be disposed in an internal space formed by the first body 1110 and the second body 1120 and may be a driven modules or elements of the electronic device. The internal element 1210 may be protected by the first body 1110 and the second body 1120. The internal element 1210 may be a module or a device which need to stop operating when the first body 1110 and the second body 1120 are separated, and in this case, may be disposed at a position other than the internal space of the first body 1110 and the second body 1120. When the electronic device according to the embodiment of the present invention is the first transmission/reception device 100 or the second transmission/reception device 200 in the camera device 1, the internal element 1210 may be an internal element included in the first transmission/reception device 100 or an internal element included in the second transmission/reception device 200. Alternatively, when the electronic device according to the embodiment of the present invention is the first light-emitting unit 110 of the first transmission/reception device 100 or the second light-emitting unit 210 of the second transmission/reception device 200 in the camera device 1, the internal element 1210 may be an internal element included in the first light-emitting unit 110 or an internal element included in the second light-emitting unit 210.

The detection pattern 1130 may include the first pattern 1131 patterned on the first body 1110 and the second pattern 1132 patterned on the second body 1120, the first pattern 1131 and the second pattern 1132 may be connected through at least one contact point 1133, and the detection pattern 1130 may be patterned by the LDS method. In addition, the detection pattern 1130 may include one or more cross patterns connected across the first body 1110 and the second body 1120 and may be patterned in a meander shape or a zigzag shape formed across the first body 1110 and the second body 1120. In addition, the first body 1110 and the second body 1120 may each include one of surfaces that face and in contact with each other, and the detection pattern 1130 may include at least one first contact point 1134 disposed on the surface of the first body 1110, which faces and is in contact with the surface of the second body 1120, and at least one second contact point disposed on the surface of the second body 1120, which faces and is in contact with the surface of the first body 1110, and corresponding to the first contact point 1134, and when the first contact points or the second contact points are bonded and then separated, the pattern can be damaged. In addition, the detection pattern 1130 may include a plurality of detection patterns forming a loop, and the plurality of detection patterns may each be patterned at a different position.

The control unit 1220 may measure resistance of the detection pattern 1130, detect the separation of the first body 1110 and the second body 1120 according to a change in resistance, and stop the operation of the internal element 1210 when detecting the separation of the detection pattern 1130. In addition, when the control unit 1220 detects the separation of the detection pattern 1130, the control unit 1220 may block the re-operation of the internal element 210 to prevent the internal element 210 from being permanently operated.

According to an embodiment of the present invention, the control unit 1220 may be an independent MCU for the electronic device 1200 or may be the control unit 400 of the camera device 1.

Although the camera device extracting depth map using the TOF method has been mainly described above, the embodiment of the present invention is not limited thereto. The camera device according to the embodiment of the present invention may be a camera device extracting depth map using the structured light method. That is, the camera device according to the embodiment of the present invention may use structured light having a predetermined pattern as an output light signal and generate depth map using the disparity of the structured light.

Although embodiments have been mainly described above, these are only illustrative and do not limit the present invention, and those skilled in the art to which the present invention pertains can know that various modifications and applications that are not exemplified above are possible without departing from the essential characteristics of the embodiments. For example, each component specifically shown in the embodiments may be implemented by modification. In addition, differences related to these modifications and applications should be construed as being included in the scope of the present invention defined in the appended claims.

**Claims**

1. A camera device comprising:

   a first transmission/reception device including a first light-emitting unit configured to output a first output light signal, and a first light-receiving unit configured to receive a first input light signal which is a signal in which the first output light signal is reflected from an object;
   a second transmission/reception device including a second light-emitting unit configured to output a second output light signal, and a second light-receiving unit configured to receive a second input light signal which is a signal in which the second output light signal is reflected from an object;
   a depth map generation unit configured to generate a depth map for the object using the first input light signal received by the first light-receiving unit and the second input light signal received by the second light-receiving unit; and
   a control unit configured to control the first transmission/reception device, the second transmission/reception device, and the depth map generation unit,
   wherein the first input light signal is an input light signal for a first area of the object, and the second input light signal is an input light signal for a second area of the object,
   the depth map includes a first depth map for an overlapping area of the object, in which the first area overlaps the second area, and a second depth map for a non-overlapping area of the object, in which the first area does not overlap the second area, and
   a resolution of the first depth map is higher than a resolution of the second depth map.

2. The camera device of claim 1, wherein the overlapping area is disposed between the non-overlapping areas.

3. The camera device of claim 2, wherein the first depth map is generated by synthesizing the first input light signal and the second input light signal for the overlapping area.

4. The camera device of claim 1, wherein a light distribution of the first output light signal is asymmetrical with respect to a center of the first area, and a light distribution of the second output light signal is asymmetrical with respect to a center of the second area.

5. The camera device of claim 4, wherein the first light-emitting unit and the second light-emitting unit each include a light source and a diffusion member disposed on the light source.

6. The camera device of claim 1, wherein the control unit controls the first light-emitting unit and the second light-emitting unit to be turned on/off alternately.

7. The camera device of claim 6, wherein an optical axis of the first light-receiving unit is parallel to an optical axis of the second light-receiving unit, an optical axis of the first light-emitting unit is not parallel to the optical axis of the second light-receiving unit, and an optical axis of the second light-emitting unit is not parallel to the optical axis of the second light-receiving unit.

8. The camera device of claim 1, further comprising an angle control member disposed between the first light-receiving unit and the second light-receiving unit to control an angle formed by an optical axis of the first light-receiving unit and an optical axis of the second light-receiving unit,
wherein a range of the overlapping area varies according to an angle formed by the optical axis of the first light-receiving unit and the optical axis of the second light-receiving unit.

9. The camera device of claim 8, wherein the control unit controls the angle control member.

10. The camera device of claim 9, wherein an optical axis of the first light-emitting unit is parallel to the optical axis of the first light-receiving unit, and an optical axis of the second light-emitting unit is parallel to the optical axis of the second light-receiving unit.

[FIG. 1]

[FIG. 2]

| ACQUIRE FIRST INPUT LIGHT SIGNAL FOR FIRST AREA | ~S210 |

| ACQUIRE SECOND INPUT LIGHT SIGNAL FOR SECOND AREA | ~S200 |

| GENERATE FIRST DEPTH MAP FOR OVERLAPPING AREA AND SECOND DEPTH MAP FOR NON-OVERLAPPING AREA | ~S230 |

[FIG. 3]

[FIG. 4]

[FIG. 5]

[FIG. 6]

[FIG. 7]

1100

1110        1120

FIRST BODY    SECOND BODY

1140

DETECTION
UNIT    →    DETECTION
PATTERN    1130

[FIG. 8]

1110        1120

FIRST BODY    SECOND BODY

FIRST
PATTERN    CONTACT
POINT    SECOND
PATTERN

1131    1133    1132

[FIG. 9]

1110    1120

1140    PA0
        PB0

1131  1132

[FIG. 10]

1131  1110
        1111
        1134

1132  1120

[FIG. 11]

[FIG. 12]

## INTERNATIONAL SEARCH REPORT

| International application No. |
| --- |
| **PCT/KR2023/011834** |

### A. CLASSIFICATION OF SUBJECT MATTER

**G02B 27/01**(2006.01)i; **G01B 7/14**(2006.01)i; **H04N 13/271**(2018.01)i; **H04N 13/254**(2018.01)i; **H04N 13/239**(2018.01)i

According to International Patent Classification (IPC) or to both national classification and IPC

### B. FIELDS SEARCHED

Minimum documentation searched (classification system followed by classification symbols)

G02B 27/01(2006.01); G01S 7/481(2006.01); G03B 15/04(2006.01); H04N 13/254(2018.01); H04N 13/271(2018.01); H04N 23/00(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 깊이 정보(depth map), ToF(Time of Flight), 카메라(camera), 영상(image), 중첩(superposition)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2021-0095842 A (LG INNOTEK CO., LTD.) 03 August 2021 (2021-08-03)<br>See paragraphs [0049]-[0113] and figure 6. | 1-10 |
| Y | WO 2021-220862 A1 (SONY SEMICONDUCTOR SOLUTIONS CORPORATION) 04 November 2021 (2021-11-04)<br>See paragraphs [0064]-[0086] and figure 8. | 1-10 |
| A | KR 10-2020-0046861 A (LG ELECTRONICS INC.) 07 May 2020 (2020-05-07)<br>See paragraphs [0051]-[0304] and figure 4. | 1-10 |
| A | KR 10-2369792 B1 (HANWHA TECHWIN CO., LTD.) 03 March 2022 (2022-03-03)<br>See paragraphs [0032]-[0078] and figures 1-4. | 1-10 |
| A | KR 10-2020-0108736 A (LG INNOTEK CO., LTD.) 21 September 2020 (2020-09-21)<br>See paragraphs [0042]-[0088]. | 1-10 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **14 November 2023** | **14 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/011834**

| Patent document cited in search report | | | Publication date (day/month/year) | Patent family member(s) | | | Publication date (day/month/year) |
|---|---|---|---|---|---|---|---|
| KR | 10-2021-0095842 | A | 03 August 2021 | CN | 106030239 | A | 12 October 2016 |
| | | | | CN | 106030239 | B | 09 October 2020 |
| | | | | CN | 112180397 | A | 05 January 2021 |
| | | | | EP | 3101382 | A1 | 07 December 2016 |
| | | | | EP | 3101382 | A4 | 30 August 2017 |
| | | | | JP | 2017-505907 | A | 23 February 2017 |
| | | | | JP | 2020-126060 | A | 20 August 2020 |
| | | | | JP | 2021-165749 | A | 14 October 2021 |
| | | | | JP | 6693880 | B2 | 13 May 2020 |
| | | | | JP | 6910499 | B2 | 28 July 2021 |
| | | | | JP | 7237114 | B2 | 10 March 2023 |
| | | | | KR | 10-2015-0090679 | A | 06 August 2015 |
| | | | | KR | 10-2015-0090685 | A | 06 August 2015 |
| | | | | KR | 10-2020-0064966 | A | 08 June 2020 |
| | | | | KR | 10-2022-0155242 | A | 22 November 2022 |
| | | | | KR | 10-2106080 | B1 | 29 April 2020 |
| | | | | KR | 10-2117561 | B1 | 01 June 2020 |
| | | | | KR | 10-2284673 | B1 | 02 August 2021 |
| | | | | US | 10338221 | B2 | 02 July 2019 |
| | | | | US | 10802148 | B2 | 13 October 2020 |
| | | | | US | 2016-0349369 | A1 | 01 December 2016 |
| | | | | US | 2019-0277971 | A1 | 12 September 2019 |
| | | | | US | 2020-0408915 | A1 | 31 December 2020 |
| | | | | WO | 2015-115797 | A1 | 06 August 2015 |
| WO | 2021-220862 | A1 | 04 November 2021 | EP | 4145170 | A1 | 08 March 2023 |
| | | | | JP | 2023-085576 | A | 21 June 2023 |
| | | | | US | 2023-0204732 | A1 | 29 June 2023 |
| KR | 10-2020-0046861 | A | 07 May 2020 | WO | 2020-085873 | A1 | 30 April 2020 |
| KR | 10-2369792 | B1 | 03 March 2022 | CN | 105939440 | A | 14 September 2016 |
| | | | | CN | 105939440 | B | 30 June 2020 |
| | | | | US | 10386468 | B2 | 20 August 2019 |
| | | | | US | 2016-0261854 | A1 | 08 September 2016 |
| KR | 10-2020-0108736 | A | 21 September 2020 | CN | 113574864 | A | 29 October 2021 |
| | | | | KR | 10-2020-0108735 | A | 21 September 2020 |
| | | | | TW | 202044823 | A | 01 December 2020 |
| | | | | US | 2022-0244390 | A1 | 04 August 2022 |
| | | | | WO | 2020-184969 | A1 | 17 September 2020 |

Form PCT/ISA/210 (patent family annex) (July 2022)